# EUROPÄISCHE PATENTSCHRIFT

(11) **EP 2 680 408 B1**
(45) Veröffentlichungstag und Bekanntmachung des Hinweises auf die Patenterteilung: **17.12.2014**
(21) Anmeldenummer: 12173599.7
(22) Anmeldetag: 26.06.2012
(51) Int. Cl.: H02K 5/20

(54) **Rahmen mit integrierter Kühlung für einen elektrischen Antrieb**
Frame with integrated cooling for an electric drive
Châssis doté d'un refroidissement intégré pour un entraînement électrique

(43) Veröffentlichungstag der Anmeldung: 01.01.2014
(73) Patentinhaber: ETEL S.A., 2112 Môtiers (CH)
(72) Erfinder: Fernandes Goncalves, José Manuel, CH-2013 Colombier (CH)
(74) Vertreter: Pleyer, Hans Anno

(56) Entgegenhaltungen:
- DE-A1-102010 042 259
- US-A1- 2005 268 464

## Beschreibung

Die vorliegende Erfindung betrifft Rahmen, mit dem der Eisenkern eines elektrischen Antriebs eingefasst und gekühlt werden kann. Solche Rahmen bilden die mechanische Schnittstelle zwischen dem Antrieb und der mit diesem Antrieb verbunden Maschine. Da es oft sinnvoll ist, einen Wärmeeintrag in die Maschine zu vermeiden, ist eine Kühlung des Antriebs an dieser Schnittstelle besonders sinnvoll.

Elektrische Antriebe, insbesondere Synchronantriebe, die ohne mechanische Übersetzung direkt mit der Anwendung verbunden werden können, sind aus der US 5642013 A bekannt. Hier wird vor allem am Beispiel von Linearmotoren gezeigt, wie solche Antriebe aufgebaut werden können, um Rastmomente zu vermeiden oder jedenfalls deutlich zu reduzieren. Zur Kühlung dieser Motoren (die auch im Stillstand und damit ohne die kühlende Wirkung bewegter Luft eine Kraft bzw. ein Drehmoment erzeugen können) werden hier Kühlkanäle zwischen den Spulen tragenden Zähnen des Eisenkerns vorgeschlagen. Solche Kühlkanäle reduzieren allerdings den Füllfaktor der Zahnzwischenräume, so dass die Motoren letztlich weniger leistungsfähig sind als solche mit mehr Windungen pro Spule. In der Figur 15 dieses Dokuments ist auch ein rotatorischer Synchronmotor gezeigt. Für solche Motoren ist die vorliegende Erfindung ganz besonders nützlich. Zu Einzelheiten bezüglich eines solchen elektrischen Antriebs sei daher ausdrücklich auf dieses Dokument aus dem Stand der Technik verwiesen.

In der EP 0868012 B1 ist ebenfalls ein linearer Synchronmotor beschrieben, der aber von der Rückseite des Blechpakets, also von der den Zähnen und Spulen gegenüberliegenden Seite her gekühlt wird. Hierzu sitzt der in Epoxidharz vergossene Eisenkern in einem aktiv gekühlten Rahmen aus Metall, auf dessen Rückseite, also den Zähnen und Spulen des Eisenkerns abgewandt, Kühlkanäle verlaufen. In einem Ausführungsbeispiel sind Einlass und Auslass für das Kühlmittel nebeneinander am selben Ende des Linearmotors angeordnet. Ein mäanderförmiger Kühlkanal wandert zum gegenüber liegenden Ende des Linearmotors und von dort wieder zurück, so dass die Kühlwirkung über die ganze Länge des Motors gleichmäßig verteilt ist. Solche mäanderförmigen Kühlkanäle sind allerdings wegen der häufigen Richtungswechsel beim Fräsen sehr aufwändig zu fertigen und verursachen wegen ihrer großen Länge einen erheblichen Druckabfall.

Die DE 102010042259 A1 beschreibt einen rotatorischen Motor mit einem den Stator tragenden Rahmen, auf dessen Außenseite zur Kühlung des Motors umlaufende, von Kühlmittel durchströmte Nuten angeordnet sind.

Die US 200510268464 A1 beschreibt ebenfalls einen rotatorischen Motor, dessen Rahmen eine integrierte Kühlung aufweist, bei der Kühlmittel eine Breite des Rahmens gegensinnig durchströmt. Der Rahmen weist in etwa die Form eines Zylindermantels auf, dessen Außenfläche mit Kühlkanälen versehen ist. Ein erstes Bündel von parallel geschalteten Kühlkanälen führt das Kühlmittel von einem Kühlmitteleinlass um nahezu den gesamten Umfang des Rahmens, ein zweites Bündel von parallel geschalteten Kühlkanälen führt das Kühlmittel um nahezu den gesamten Umfang des Rahmens zu einem Kühlmittelauslass zurück.

Aufgabe der Erfindung ist es, solche Rahmen für elektrische Antriebe weiter zu entwickeln.

Diese Aufgabe wird gelöst durch eine Vorrichtung mit den Merkmalen des Anspruchs 1. Bevorzugte Ausführungsformen ergeben sich aus den von Anspruch 1 anhängigen Ansprüchen.

Es wird ein Rahmen mit integrierter Kühlung für einen elektrischen Antrieb offenbart, bei dem Kühlmittel eine Breite des Rahmens gegensinnig durchströmt. Der Rahmen weist in etwa die Form eines Zylindermantels mit einem Durchmesser und einer axialen Breite auf, dessen Außenfläche mit Kühlkanälen versehen ist. Ein erstes Bündel von parallel geschalteten Kühlkanälen führt das Kühlmittel von einem Kühlmitteleinlass um nahezu den gesamten Umfang des Rahmens, ein zweites Bündel von parallel geschalteten Kühlkanälen führt das Kühlmittel um nahezu den gesamten Umfang des Rahmens zu einem Kühlmittelauslass zurück.

Dank der gegensinnigen Durchströmung des Rahmens ist die über die Breite des Rahmens gemittelte Kühlmitteltemperatur über weite Bereiche des Rahmens konstant, denn im Bereich von Kühlmitteleinlass und Kühlmittelauslass verlaufen besonders kaltes und besonders warmes Kühlmittel nebeneinander (jedoch in entgegengesetzte Richtungen), während nahe eines Umkehrbereichs das Kühlmittel im ersten und zweiten Bündel nahezu die gleiche, mittlere Temperatur hat.

Dank der Parallelschaltung von jeweils mehreren Kühlkanälen wird der Druckabfall im Kühlkreislauf gering gehalten. Der Energieaufwand für die Kühlung des Antriebs reduziert sich dadurch deutlich. Bei gegebenem Druck im Kühlkreislauf erhöht sich der Durchfluss und damit der Wärmeübergang in das Kühlmittel.

Bei der Gestaltung des Rahmens wurde auf eine einfache Herstellbarkeit großen Wert gelegt. So lässt sich der Kühlkreislauf mit sehr einfachen, meist geraden Bahnen in den Rahmen fräsen. Eine Manschette zum Abdichten der Kühlkanäle lässt sich dank geeigneter Schlitze dann sehr einfach mit dem Rahmen verbinden.

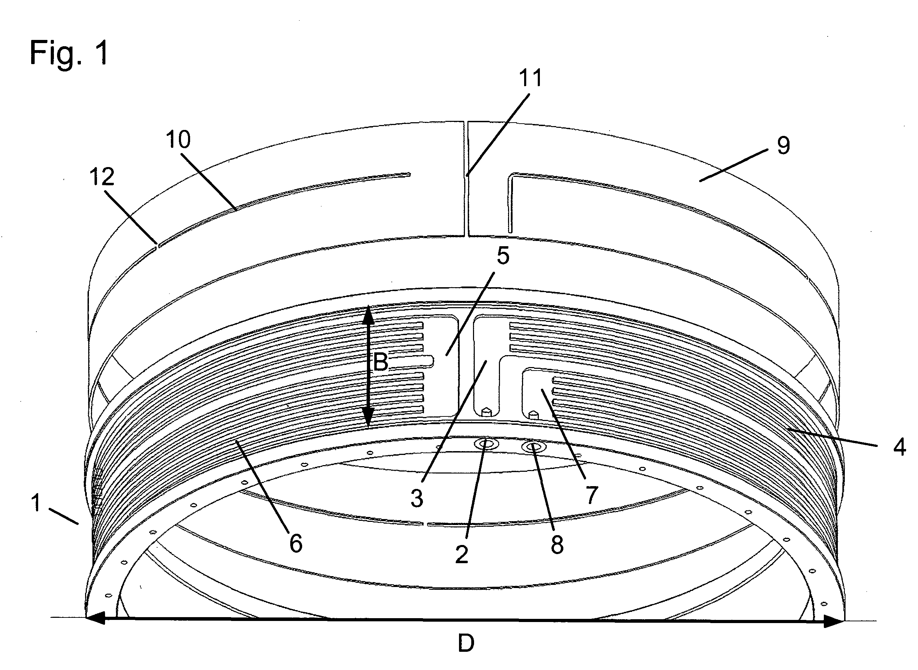

Weitere Vorteile sowie Einzelheiten der vorliegenden Erfindung ergeben sich aus der nachfolgenden Beschreibung einer bevorzugten Ausführungsform anhand der Figuren. Dabei zeigt die
- Figur 1: einen Rahmen mit integrierter Kühlung für einen elektrischen Antrieb.

In der Figur 1 erkennt man einen Rahmen 1, der das Blechpaket eines Stators eines elektrischen Antriebs aufnehmen, als mechanische Schnittstelle für diesen Antrieb dienen und diesen Antrieb aktiv kühlen kann. Der Rahmen ist im Wesentlichen Zylindermantelförmig und besteht aus einem Metall wie Stahl oder Aluminium. Im Inneren des Rahmens wird beispielsweise der Stator eines rotatorischen Antriebs, wie er einleitend als Stand der Technik beschrieben wurde, eingesetzt. Die in den Spulen des Antriebs entstehende Wärme wird über den Eisenkern des Antriebs an den Rahmen 1 abgegeben. Eine aktive Kühlung des Rahmens 1 dient also der Kühlung des Antriebs und isoliert die eigentliche Anwendung von der Wärmequelle.

Hierzu weist der Rahmen 1 einen Kühlmitteleinlass 2 auf, der als axiale Bohrung in eine Stirnfläche des Rahmens ausgeführt ist. Die mit einem Innegewinde zum Anschluss einer Kühlleitung versehene Bohrung endet in einem Einlassbereich 3, der als Vertiefung in der Oberfläche des Rahmens eingearbeitet ist. Hierzu wird beispielsweise mittels eines Fräsprozesses eine Tasche auf der Oberfläche des Rahmens ausgeräumt.

Ausgehend vom Einlassbereich 3 wird das Kühlmittel (z.B. Wasser mit geeigneten Additiven als Rost- und Frostschutz) durch ein erstes Bündel von parallel verlaufenden und parallel geschalteten Kühlkanälen 4 um nahezu den gesamten Umfang des Rahmens geführt. Der parallele Verlauf der einzelnen Kanäle ist besonders einfach herzustellen, da lediglich gerade Nuten auf der Oberfläche des Rahmens zu fräsen sind. Die Parallelschaltung der einzelnen Kühlkanäle bewirkt außerdem eine deutliche Reduzierung des Druckabfalls im Kühlkreislauf. Dennoch ergibt die Mehrzahl an relativ schmalen Kühlkanälen 4 einen guten Kontakt zwischen dem Kühlmittel und dem Rahmen 1 und sorgt so für einen guten Wärmeübergang in das Kühlmittel. Die Form der Kühlkanäle und die Geschwindigkeit des Kühlmittels sollten möglichst so gewählt werden, dass eher eine turbulente als eine laminare Strömung herrscht, da dann der Wärmeübergang in das Kühlmittel besser ist.

Das erste Bündel von Kühlkanälen 4 endet nach einem fast vollständigen Umlauf um den Rahmen in einem Umkehrbereich 5, der räumlich nahe am Einlassbereich 3 liegt, mit diesem aber nicht verbunden ist. Der Begriff "fast vollständiger Umlauf" hier oder "nahezu gesamter Umfang" im Absatz oben soll so verstanden werden, dass die Kühlmittelkanäle den auf der Oberfläche des Rahmens nebeneinander liegenden Einlassbereich 3 mit dem Umkehrbereich 5 verbinden. Hierzu ist eben ein nahezu vollständiger Umlauf nötig - es fehlt lediglich der Bereich, den der Einlassbereich 3 und der Umkehrbereich 5 einnehmen.

Im Umkehrbereich 5 wird das Kühlmittel durchmischt, so dass bei einer ungleichmäßigen Erwärmung des Kühlmittels in den einzelnen Kanälen 4 des ersten Bündels ein Temperaturausgleich erfolgt.

Vom Umkehrbereich 5 aus gelangt das Kühlmittel durch ein zweites Bündel von Kühlkanälen 6 in einen Auslassbereich 7, wobei sich auch dieses zweite Bündel wieder über nahezu den gesamten Umfang des Rahmens 1 erstreckt. Die Anzahl der Kühlkanäle 4, 6 im ersten und zweiten Bündel muss dabei nicht unbedingt gleich sein. Je nach Platzangebot kann sich diese Anzahl beispielsweise um 1 unterscheiden, wie in der Figur gezeigt.

Der Auslassbereich 7 ist schließlich genauso aufgebaut wie der Einlassbereich 3.

Teilt man die Breite B des Rahmens 1 in zwei axial gegeneinander versetzte Hälften, so verläuft das erste Bündel 4 in einer der beiden Hälften, das zweite Bündel 6 in der anderen Hälfte. Da das Kühlmittel, das den Rahmen 1 gegensinnig durchläuft, auf seinem Weg durch den Rahmen 1 relativ gleichmäßig erwärmt wird, ist die über die Breite B gemittelte Temperatur des Kühlmittels über den Umfang des Rahmens konstant. Somit wird eine gleichmäßige Kühlung des Antriebs erzielt.

Um den Kühlmitteleinlass 2 und den Kühlmittelauslass 8 auf derselben Stirnseite des Rahmens 1 anordnen zu können, erstreckt sich der Einlassbereich 3 über beide Rahmenhälften, bzw. über nahezu die ganze Breite B des Rahmens 1.

Um die Kühlkanäle 4, 6, den Einlassbereich 3, den Umkehrbereich 5 und den Auslassbereich 7 abzudichten, wird um den Rahmen 1 eine Manschette 9 gelegt und dicht mit diesem verbunden. Hierzu wird die Manschette 9 an den beiden ringförmigen Kanten mit dem Rahmen 1 verschweißt. Außerdem weist die Manschette 9 erste und zweite Schlitze 10, 11 auf, entlang derer sie ebenfalls mit dem Rahmen verschweißt wird. Alternativ könnte die Manschette auch durch Kleben oder mittels Schrauben und geeigneten Dichtungen am Rahmen befestigt werden.

Der erste Schlitz 10 der Manschette 9 verläuft dabei zwischen dem ersten und zweiten Bündel 4, 6 von Kühlkanälen, und dichtet diese beiden Bereiche gegeneinander ab. Der erste Schlitz 10 knickt außerdem so ab, dass er zwischen dem Einlassbereich 3 und dem Auslassbereich 7 eine Kante der Manschette 9 erreicht. So sind auch diese beiden Bereiche gegeneinander abgedichtet. Der erste Schlitz 10 wird außerdem von Stegen 12 unterbrochen, die der Manschette 9 vor der Montage eine gewisse Stabilität verleihen.

Der zweite Schlitz 11 trennt die Manschette axial auf und verläuft zwischen dem Umkehrbereich 5 und dem Einlassbereich 3. Nach dem Verschweißen der Manschette entlang dieses zweiten Schlitzes 11 sind diese beiden Bereiche gegeneinander abgedichtet. Zwischen den jeweiligen Kanälen 4, 6 des ersten bzw. zweiten Bündels kann jedoch ein gewisser Austausch von Kühlmittel stattfinden, was für die Funktion des Kühlkreislaufes jedoch nicht störend ist.

Der vorwiegend gerade Verlauf der für die Verbindung von Rahmen 1 und Manschette 9 vorgesehenen Schweißnähte sorgt wiederum für einen relativ einfachen Fertigungsprozess. Die Manschette 9 selbst kann außerdem ganz einfach aus einem flachen Blech gefertigt und dann um den Rahmen 1 gebogen werden.

Natürlich lässt sich der Kühlmittelkreislauf auch in der entgegengesetzten Richtung betreiben. An der hier beschrieben Vorrichtung ändert sich dadurch nichts, es tauschen lediglich der Einlassbereich 3 und der Auslassbereich 7 sowie der Einlass 2 und der Auslass 8 ihre Funktion.

## Patentansprüche

1. Rahmen mit integrierter Kühlung für einen elektrischen Antrieb, bei dem Kühlmittel eine Breite (B) des Rahmens (1) gegensinnig durchströmt, wobei der Rahmen (1) einen Zylindermantel mit einem Durchmesser (D) und einer axialen Breite (B) bildet, auf dessen Außenfläche Kühlkanäle (4, 6) angeordnet sind, wobei ein erstes Bündel von parallel geschalteten Kühlkanälen (4) das Kühlmittel von einem Kühlmitteleinlass (2) um nahezu den gesamten Umfang des Rahmens (1) führt, und ein zweites Bündel von parallel geschalteten Kühlkanälen (6) das Kühlmittel um nahezu den gesamten Umfang des Rahmens (1) zu einem Kühlmittelauslass (8) zurück führt, wobei das erste Bündel von Kühlkanälen (4) in einen axial erstreckten Umkehrbereich (5) mündet, von dem aus, in axialer Richtung versetzt zum ersten Bündel, das zweite Bündel von Kühlkanälen (6) abgeht, wobei der Kühlmitteleinlass (2) in einen Einlassbereich (3) mündet, von dem aus das erste Bündel von Kühlmittelkanälen (4) abgeht, und wobei das zweite Bündel von Kühlmittelkanälen in einen Auslassbereich (7) mündet, der mit dem Kühlmittelauslass (8) in Verbindung steht, wobei das erste und zweite Bündel von Kühlmittelkanälen (4, 6), der Umkehrbereich (5) und der Auslassbereich (7) von einer zylindrischen Manschette (9) abgedichtet sind, die am äußeren Umfang des Rahmens (1) anliegt, **dadurch gekennzeichnet, dass** die Manschette (9) einen ersten Schlitz (10) aufweist, der zwischen dem ersten und zweiten Bündel von Kühlkanälen (4, 6) sowie zwischen dem Einlassbereich (3) und dem Auslassbereich (7) verläuft, und entlang dem die Manschette (9) mit dem Rahmen (1) verbunden ist.

2. Rahmen nach Anspruch 1, **dadurch gekennzeichnet, dass** die Manschette (9) mit dem Rahmen (1) durch Schweißen verbunden ist.

3. Rahmen nach einem der Ansprüche 1 oder 2, **dadurch gekennzeichnet, dass** die Manschette (9) einen zweiten Schlitz (11) aufweist, der in axialer Richtung zwischen dem Umkehrbereich (5) und dem Einlassbereich (3) verläuft, und entlang dem die Manschette (9) mit dem Rahmen (1) verbunden ist.

4. Elektrischer Antrieb, mit einem Stator, dessen Blechpaket von einem Rahmen nach einem der vorhergehenden Ansprüche eingefasst ist.

## Claims

1. Frame with integrated cooling for an electric drive, in which coolant flows through a width (B) of the frame (1) in opposite directions, wherein the frame (1) forms a cylindrical casing with a diameter (D) and an axial width (B), cooling ducts (4, 6) being arranged on the outer surface of said casing, wherein a first bundle of cooling ducts (4) connected in parallel guides the coolant from a coolant inlet (2) around virtually the entire circumference of the frame (1), and a second bundle of cooling ducts (6) connected in parallel guides the coolant around virtually the entire circumference of the frame (1) back to a coolant outlet (8), wherein the first bundle of cooling ducts (4) opens into an axially extended reversal region (5) from which, offset to the first bundle in the axial direction, the second bundle of cooling ducts (6) emanates, wherein the coolant inlet (2) opens into an inlet region (3) from which the first bundle of coolant ducts (4) emanates, and wherein the second bundle of coolant ducts opens into an outlet region (7) which is connected to the coolant outlet (8), wherein the first and second bundle of coolant ducts (4, 6), the reversal region (5) and the outlet region (7) are sealed by a cylindrical sleeve (9) which bears on the outer circumference of the frame (1), **characterized in that** the sleeve (9) has a first slot (10) which extends between the first and second bundle of cooling ducts (4, 6) and also between the inlet region (3) and the outlet region (7), and along which the sleeve (9) is connected to the frame (1).

2. Frame according to Claim 1, **characterized in that** the sleeve (9) is connected to the frame (1) by welding.

3. Frame according to either of Claims 1 and 2, **characterized in that** the sleeve (9) has a second slot (11) which extends in the axial direction between the reversal region (5) and the inlet region (3), and along which the sleeve (9) is connected to the frame (1).

4. Electric drive having a stator whose laminated core is enclosed by a frame according to one of the preceding claims.

## Revendications

1. Châssis doté d'un refroidissement intégré pour un entraînement électrique, dans lequel un réfrigérant parcourt en sens inverses une largeur (B) du châssis (1), le châssis (1) formant une enveloppe cylindrique présentant un diamètre (D) et une largeur axiale (B), sur la surface extérieure de laquelle sont disposés des canaux de refroidissement (4, 6), un premier faisceau de canaux (4) connectés en parallèle guidant le réfrigérant à partir d'une entrée de réfrigérant (2) sur pratiquement toute la périphérie du châssis (1), et un deuxième faisceau de canaux de refroidissement (6) connectés en parallèle ramenant le réfrigérant sur pratiquement toute la périphérie du châssis (1) jusqu'à une sortie de réfrigérant (8), le premier faisceau de canaux de refroidissement (4) débouchant dans une région d'inversion (5) s'étendant axialement, de laquelle part le deuxième faisceau de canaux de refroidissement (6), de manière décalée par rapport au premier faisceau dans la direction axiale, l'entrée de réfrigérant (2) débouchant dans une région d'entrée (3) de laquelle part le premier faisceau de canaux de réfrigérant (4), et le deuxième faisceau de canaux de réfrigérant débouchant dans une région de sortie (7) qui est en liaison avec la sortie de réfrigérant (8), le premier et le deuxième faisceau de canaux de réfrigérant (4, 6), la région d'inversion (5) et la région de sortie (7) étant étanchéifiés par une garniture cylindrique (9) qui s'applique contre la périphérie extérieure du châssis (1), **caractérisé en ce que** la garniture (9) comprend une première fente (10) qui s'étend entre le premier et le deuxième faisceau de canaux de refroidissement (4, 6) ainsi qu'entre la région d'entrée (3) et la région de sortie (7), et le long de laquelle la garniture (9) est reliée au châssis (1).

2. Châssis selon la revendication 1, **caractérisé en ce que** la garniture (9) est reliée au châssis (1) par soudage.

3. Châssis selon l'une des revendications 1 et 2, **caractérisé en ce que** la garniture (9) comprend une deuxième fente (11) qui s'étend dans la direction axiale entre la région d'inversion (5) et la région d'entrée (3), et le long de laquelle la garniture (9) est reliée au châssis (1).

4. Entraînement électrique, comprenant un stator dont le noyau feuilleté est encadré par un châssis selon l'une quelconque des revendications précédentes.
